# EUROPEAN PATENT APPLICATION

(11) **EP 2 907 754 A1**
(43) Date of publication of application: **19.08.2015**
(21) Application number: 15152572.2
(22) Date of filing: 26.01.2015
(51) Int. Cl.: B64D 11/06

(54) **Aircraft passenger seating arrangements**

(30) Priority: 12.02.2014 GB 201402455
(71) Applicant: British Airways PLC, Harmondsworth, West Drayton UB7 0GB (GB)
(72) Inventor: Darbyshire, Martin, London, Greater London SE1 4PU (GB)
(74) Representative: Cross, James Peter Archibald

(57) **Abstract**

An aircraft passenger seating array comprises first and second columns (C1, C2) of seating arrangements, the columns both extending parallel to and at either side of a centre line (L) of the cabin, wherein the central axes of the seats (1) of the first column (C2) face forward at a first angle to the centre line (L) and away from the second column (C1), and the central axes of the seats (1) of the second column (C1) face backward at a second angle to the centre line (L) and away from the first column (C2).

## Description

The present invention relates to an aircraft passenger seating arrangement, to an array of such seating arrangements, and to an aircraft cabin including such an array.

### Background to the Invention

Examples of prior art aircraft sleeper seats are disclosed in the applicant's patent publications WO-A-9618537, WO-A-0021831, WO-A-2007/072045, WO-A-2007/135373 and WO-A-2009/066054, embodiments of which include current and previous versions the British Airways First and Club World (RTM) seats. These seats can be converted into a flat, horizontal bed, and have enjoyed great commercial success. However, there is intense competition to provide ever-greater comfort and space for aircraft passengers.

Passenger seats for aircraft are subject to stringent design constraints, many of which are not applicable to seats for other vehicle types. One problem is the need to meet the relevant safety standards for aircraft passenger seats, such as the 16g test that requires seats to survive deceleration of 16g in a takeoff/landing position. Another problem is the need to minimize the weight of the seat, since carrying extra weight on an aircraft increases fuel consumption and therefore monetary and environmental cost. Hence, the seat must be both strong and light.

Another problem relates to the use of space. Any given aircraft cabin has a maximum area available for passenger seating, which must be used in the most space-efficient manner possible so as to maximize the seating area and legroom available to each passenger, while allowing unimpeded exit from the seat. It is also desirable for cost reasons to fit as many passenger seats as possible in the available area, without sacrificing passenger comfort and convenience.

Another problem relates to the level of comfort of the seat. Aircraft passenger seats may be used for day flights, in which the passenger will want to work, eat and/or relax, and night flights during which the passenger will want to sleep. Preferably, an aircraft passenger seat should allow a passenger to adopt comfortable positions for all of these activities.

Another problem relates to the psychological and/or social needs of aircraft passengers, who may desire privacy while working, eating or sleeping, or may wish to interact with a travelling companion.

Another problem relates to the amount of personal storage space available to the aircraft passenger. Conventionally, much of the space around an individual seat is taken up by reclining mechanisms, or needs to be kept clear to allow movement of the seat, so cannot be used for storage.

### Statement of the Invention

Aspects of the present invention comprises an array of aircraft passenger seating arrangements according to claim 1 and 3. Specific embodiments are defined in the dependent claims.

### Brief Description of the Drawings

Embodiments of the invention will now be described with reference to the drawings identified below.
Figures 1a to 1c are perspective views from different angles of an array of aircraft passenger seating arrangements in a first embodiment of the present invention.
Figure 2 is a schematic plan view of an array of aircraft passenger seating arrangements in a second embodiment of the present invention.
Figure 3 is a schematic plan view of an array of aircraft passenger seating arrangements in a third embodiment of the present invention.
Figure 4 is a schematic plan view of an array of aircraft passenger seats in a fourth embodiment, in an aircraft cabin section.
Figure 5 is a schematic plan view of an array of aircraft passenger seats in a fifth embodiment, in an aircraft cabin section.

### Detailed Description of the Embodiments

### Terminology

In describing the embodiments, 'horizontal' and 'vertical' are defined with reference to the floor of the passenger seating area of the aircraft. As in well known in the art, the angle of the floor relative to the gravitational horizontal is determined by the pitch of the aircraft, which is about 15° during takeoff and landing, and about 3° in level flight. When describing an individual seating arrangement, 'forward' and 'rearward' are defined with reference to direction in which the passenger faces. 'Inward' and 'outward' are defined with reference to a central longitudinal axis of the cabin.

Similar parts between different embodiments are indicated by the same reference numerals, and their description is not necessarily repeated for each embodiment.

### First Embodiment

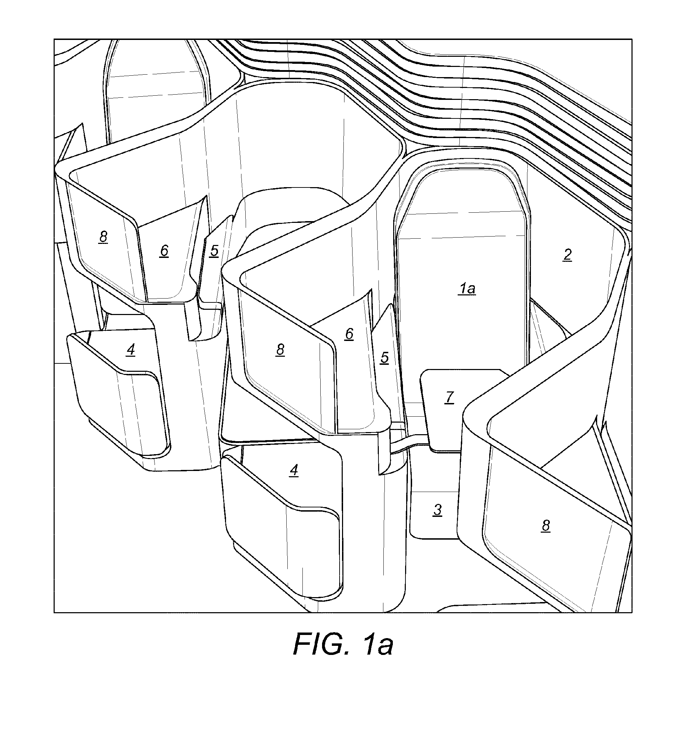

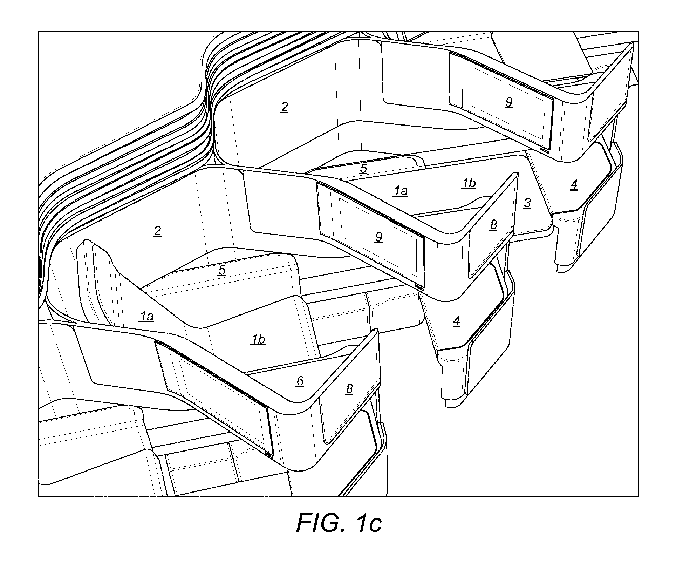

As shown in Figures 1a to 1c, an aircraft passenger seating arrangement in a first embodiment of the present invention comprises the following main components: a seat 1 comprising a seat back 1a and a seat pan 1b, a seat housing or shell 2 surrounding the seat 1, and a leg/foot support 4 spaced forward of the seat 1. Armrests 5 are provided to either side of the seat 1. A side surface 6 is provided to one side of the seat 1, preferably on an aisle-facing side of the seating arrangement, beyond one of the armrests 5. A tray table 7 may be deployable from a stowed position to a deployed position opposite the seat 1. A privacy screen 8 may be arranged on the far side of the side surface 6 from the seat 1, preferably facing the aisle of the aircraft cabin. An IFE (in-flight entertainment) screen 9 is positioned on a portion of the shell 2 facing the seat 1.

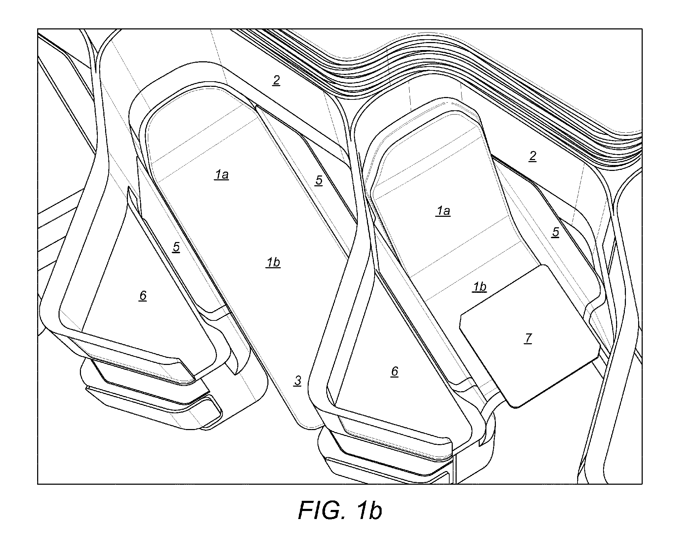

The seat 1 is reclinable between a sitting position, shown on the right hand side of Figures 1a and 1b, and a bed position shown on the left hand side of Figures 1a and 1b. In the sitting position, the seat back 1a is substantially vertical but reclined slightly backwards, and the seat pan 1b is substantially horizontal but reclined slightly backwards. The angle of recline of the seat back 1a and/or the seat pan 1b may be adjusted. In the bed position, the seat back 1a and seat pan 1b are substantially horizontal, and coplanar with the leg/foot support 4 so as to form a bed surface.

A leg rest 3 be provided to fill any space between the seat pan 1b and the foot/leg support 4 in the bed position, the leg rest 3 being substantially horizontal and coplanar with the seat back 1a, seat pan 1b and leg/foot support 4 in this position, so as to form part of the bed surface. The leg rest 3 may be pivotally attached at the front end of the seat pan 1b, and may be stowed in a substantially vertical position below the seat pan 1b when not in use, as shown for example in Figure 1a. Alternatively, in a seat configuration where the seat pan 1b lies adjacent to the foot/leg support 4 in the bed position, the leg rest 3 may not be required.

The armrests 5 may be fixed, and the seat 1 may rise into the bed position so as to be level with the upper surface of the armrests 5, so that the armrests 5 form part of the bed surface. Alternatively, the armrests 5 may be lowered so as to be level with the seat 1 in bed position.

The seat 1 may be continuously reclinable between the sitting position and the bed position, driven for example by one or more drive motors under the control of the passenger. The angle of the seat back 1a and seat pan 1b may be governed by a reclining mechanism as disclosed for example in WO-A-2007/072045.

Instead of reclining from the sitting to the bed position, the seat 1 may flip over, as disclosed for example in WO-A-03013903. In this alternative, the back 1a may rotate forwardly over the seat pan 1b so that the rear surface of the seat back 1a forms part of the bed surface.

The seating arrangements are arranged in a column, each seat extending at an angle to the longitudinal direction of the column. This arrangement allows the side surface 6 to extend over the leg/foot support 4 of the adjacent seating arrangement in the column, thus providing more usable space for the passenger. Different column arrangements will now be described.

### Second Embodiment

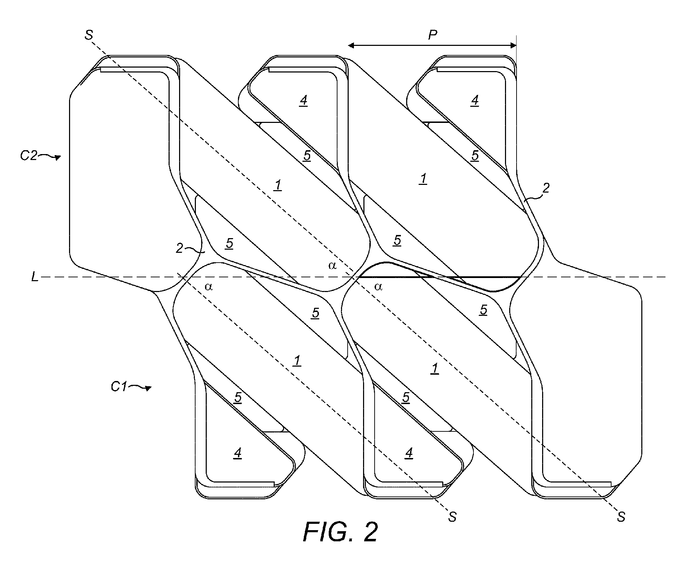

Figure 2 shows a second embodiment, in which the seating arrangements similar to those of the first embodiment are arranged in first and second columns C1, C2 both extending along either side of a centre line L. The seating arrangements of the first column C1 are staggered in the longitudinal direction such that the shell 2 extends over the centre line L of the columns C1, C2. The upper ends of the seat backs 1a also extend over the centre line L in the bed position, thus providing improved packing density of the seating arrangements.

The centre line L may be substantially coincident with the central longitudinal axis of the aircraft cabin, and aisles arranged outside the columns C1 and C2. The seats 1 of the first and second columns C1, C2 face away from the centre line L in mutually opposite directions, with the seats 1 of one column C1 facing towards the front of the aircraft cabin and the seats 1 of the other column C2 facing towards the back of the cabin. For each seat 1, a seat axis S may be defined in the direction in which the seat 1 faces when sitting, and extends in the bed position. An angle α may be defined between the seat axis S and the centre line L. Hence, if the direction of the seat axes S of column C1 are at angle α to a longitudinal direction of the columns C1, C2, then direction of the seat axes S of column C2 are at an angle of 180° + α to a longitudinal direction. Angle α is approximately 40° in this embodiment, but may be in the range 30° to 50°, and preferably 35° to 45°.

In this embodiment, the seat pitch P (i.e. the seat spacing in the longitudinal direction) is 38 inches (0.97 m). The bed surface length is approximately 74 inches (1.88 metres).This arrangement is suitable for the main deck of an Airbus A380 (RTM) passenger aircraft.

### Third Embodiment

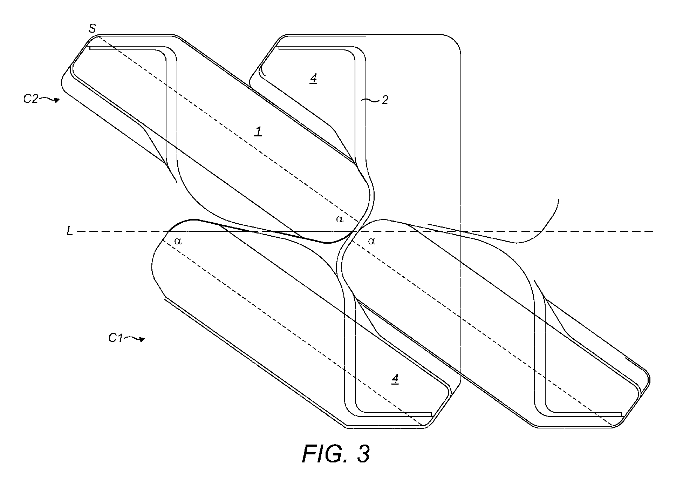

Figure 3 shows a third embodiment similar to the second embodiment, but with an angle α of approximately 35°. The seat pitch P is approximately 43.5 inches (1.1 metres). This arrangement is suitable for the main deck of a Boeing 777 (RTM) passenger aircraft. Alternative arrangements may be provided for different aircraft cabin sizes and/or shapes.

### Fourth Embodiment

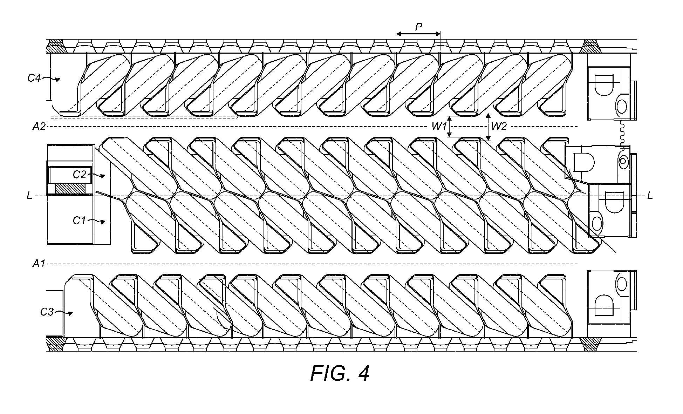

Figure 4 shows a LOPA (Layout of Passenger Accommodation) of seating arrangements in a fourth embodiment, in an aircraft cabin section, such as the main deck of an Airbus A380 (RTM) passenger aircraft. The seating arrangements are arranged in four columns C1 to C4, each comprising 12 seating arrangements, providing 48 seating arrangements within the cabin section. The seating arrangements of the two central columns C1, C2 are similar to those of the second embodiment. Outer columns C3, C4 of seating arrangements are provided adjacent respective cabin sidewalls, separated by a respective aisle A1, A2 from respective central columns C1, C2. The aisle width W1 at floor level is 17.6 inches (0.447 metres), while the aisle width between privacy screens 8 is 23.1 inches (0.587 metres)

The seating arrangements of the outer columns C3, C4 are angled inwardly from the cabin sidewalls at approximately the same angle α as the central columns C1, C2.

### Fifth Embodiment

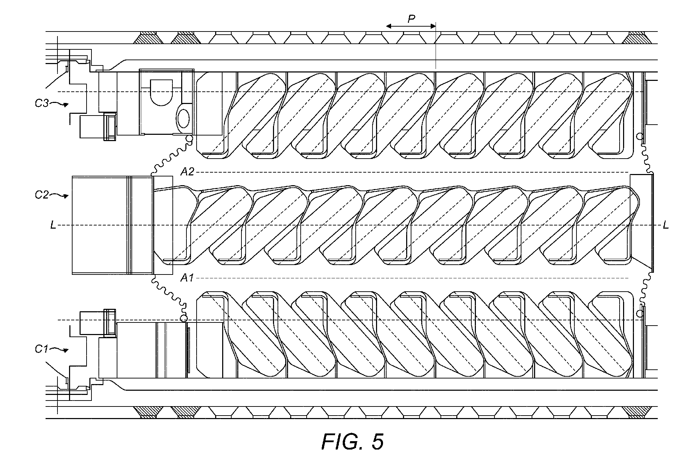

Figure 5 shows a LOPA (Layout of Passenger Accommodation) of seating arrangements in a fifth embodiment in an aircraft cabin section, for example in a Boeing 787 (RTM) passenger aircraft. The seating arrangements are arranged in three columns C1 to C3, separated from one another by respective aisles. The seating arrangements of the outer columns C1, C3 are angled inwardly from the cabin sidewalls at approximately the same angle α. The seating arrangements of the central column C2 are angled at approximately the same angle α.

The seat pitch P in this embodiment is approximately 34 inches (86.36 cm), and the angle α is approximately 47.5°.

### Alternative Embodiments

Alternative embodiments of the invention may be apparent from reading the above description. Such alternative embodiments may nevertheless fall within the scope of the present invention.

## Claims

1. An array of passenger seating arrangements for an aircraft passenger cabin, each said seating arrangement comprising:
a. a seat (1) convertible between a substantially upright seating position and a substantially flat, horizontal bed position extending substantially parallel to a central axis of the seat (1);
b. a foot/leg rest (4) positioned opposite the seat (1) so as to form part of a bed surface together with the seat (1) in the bed position; and
c. a side surface (6) provided to one side of the seat (1);
wherein the array comprises a column (C1; C2; C3; C4) of said seating arrangements extending substantially parallel to a centre line (L) of the cabin, and the central axes of the seats within the column extend at an angle to the centre line (L), towards an aisle (A1; A2) of the cabin;
wherein the side surface (6) of each said seating arrangement extends over a portion of an adjacent one of the seating arrangements within the column (C1; C2; C3; C4); and
wherein a privacy screen (8) is arranged on a side of the side surface away from the seat (1), and towards the aisle (A1; A2).

2. The array of passenger seating arrangements of claim 1, wherein the array comprises first and second columns (C1, C2) of said seating arrangements, the columns both extending parallel to and at either side of a centre line (L) of the cabin, wherein the central axes of the seats (1) of the first column (C2) face forward at a first angle to the centre line (L) and away from the second column (C1), and the central axes of the seats (1) of the second column (C1) face backward at a second angle to the centre line (L) and away from the first column (C2).

3. An array of passenger seating arrangements for an aircraft passenger cabin, each said seating arrangement comprising:
a. a seat (1) convertible between a substantially upright seating position and a substantially flat, horizontal bed position extending substantially parallel to a central axis of the seat (1);
b. a foot/leg rest (4) positioned opposite the seat (1) so as to form part of a bed surface together with the seat (1) in the bed position; and
c. a side surface (6) provided to one side of the seat (1);
wherein the array comprises first and second columns (C1, C2) of said seating arrangements, the columns both extending parallel to and at either side of a centre line (L) of the cabin, wherein the central axes of the seats (1)of the first column (C2) face forward at a first angle to the centreline(L) and away from the second column (C1), and the central axes of the seats (1) of the second column (C1) face backward at a second angle to the centre line(L) and away from the first column (C2); and
wherein the side surface (6) of each said seating arrangement extends over a portion of an adjacent one of the seating arrangements within the same column (C1; C2).

4. The array of claim 3, wherein the first and second columns (C1, C2) overlap over the centre line (L) of the cabin.

5. The array of any preceding claim, wherein said angle is in the range 30° to 50°.

6. The array of claim 5, wherein the angle is in the range 35° to 45°.

7. The array of any preceding claim, wherein the side surface (6) extends over the foot/leg rest (4) of the adjacent one of the seating arrangements.

8. An aircraft cabin including the array of any preceding claim.
